# EUROPEAN PATENT APPLICATION

(11) **EP 3 603 914 A1**
(43) Date of publication of application: **05.02.2020**
(21) Application number: 18186917.3
(22) Date of filing: 01.08.2018
(51) Int. Cl.: B28D 5/04, B28D 5/00, B23D 57/00

(54) **WIRE MANAGEMENT SYSTEM FOR A WIRE SAW AND METHOD OF OPERATING A WIRE SAW WITH SUCH A SYSTEM**

(71) Applicant: Precision Surface Solutions GmbH, 3645 Gwatt (Thun) (CH)
(72) Inventor: FRECH, Gregor, 3012 Bern (CH); WENGER, Markus, 3752 Wimmis (CH)
(74) Representative: Patentbüro Paul Rosenich AG

(57) **Abstract**

The invention relates to a wire management system (7) for a wire saw (8) comprising
- a control device (30),
- a wire supplying side (5),
- a wire receiving side (6),
wherein the wire supplying side (5) and/or the wire receiving side (6) comprise(s) a controllable tensioner (20, 31) for adjusting the tension of cutting wire (3) and a traveler pulley drive (32) for moving a traveler pulley (4) along the rotational axis of a storage spool (2), and wherein a pulley sensor (33) is provided for measuring a force acting on the traveler pulley (4) in a direction which is transverse to the rotational axis of the traveler pulley (4) and that the control device (30) is configured to control the tensioner (20, 31) and the traveler pulley drive (32) each in dependence of the sensor data of the sensor (33) of that wire side (5, 6).

## Description

The invention relates to a wire management system for a wire saw according to the preamble of claim 1 or claim 2, a wire saw and a method of operating a wire saw.

WO2014087340A2 discloses a wire management system for a wire saw wire saw, which has a cutting area and wire guiding means for carrying a wire web in the cutting area. The wire management system comprises a wire supplying side for supplying (new) cutting wire to the cutting area, and a wire receiving side for receiving (used) cutting wire from the cutting area. Clearly, the supplying side also receives cutting wire and the receiving side also supplies cutting wire as the wire is moved back and forth through the cutting area (Pilgrim mode), but on average the wire moves from the supplying side, where the spool with new wire is located, to the receiving side, where the spool for used-up wire is located. Each wire side comprises pulleys for guiding or deflecting the cutting wire when moving between the cutting area and the storage and/or reservoir spool(s) of a wire side. Particularly, there is provided a tensioning pulley for adjusting the tension within the wire and a traveler pulley for guiding/spooling the wire towards (or from) the storage and/or reservoir spool.

From other prior art relating to wire saws it is known, to use a deflection pulley in the immediate vicinity of the cutting area - or even in the cutting compartment - in order to deflect the wire when coming from (or moving to) the wire guiding means (carrying the wire web). A load cell is used for measuring a force on the pulley exerted by the deflected wire. That force is a measure of the wire tension. The wire tension may then be adjusted by a tensioner, which usually comprises an adjustable tensioning pulley.

It is however, very disadvantageous to have a load cell in the immediate vicinity of the cutting area or even within the cutting compartment. The load cell is exposed there to cutting liquid, dirt and dust, causing erroneous measurements, short life time and even damages of the load cell. In addition costs should be reduced too.

It is therefore an object of the invention to provide a wire management system by means of which the disadvantages arising in prior art may be solved. Particularly, the system should be capable of reliably controlling the tension of the wire. The function should be independent of negative impacts resulting from the conditions in the immediate vicinity of the cutting area (i.e. should not be impaired by cutting liquid, dirt, dust, etc.). At the same time the wire management system should have a simple construction and be realizable by customary components.

The object is achieved by a wire management system as mentioned at the beginning, wherein at least one of the wire supplying side and the wire receiving side, preferably the wire supplying side and the wire receiving side each, comprise(s) a pulley sensor for measuring a force acting on the traveler pulley in a direction which is transverse, preferably perpendicular, to the rotational axis of the traveler pulley, and that the control device is configured to control within a wire side the tensioner and the traveler pulley drive each in dependence of the sensor data of the sensor of that wire side.

The sensor data of the sensor are used within a wire side to control both, the tensioner and the traveler pulley drive. This may be done concurrently (both, the tensioner and the traveler pulley drive, are controlled at the same time based on the same data), at different times (at one point in time the tensioner is controlled based on that data and at another point in time the traveler pulley drive is controlled based on that data) or any combination thereof.

The pulley sensor, which is preferably a load cell, measures a force exerted by the deflected wire on the traveler pulley. That force originates by the tension of the wire and is therefore a direct measure of the wire tension.

According to the invention the control device is
- not only configured to control the tensioner in dependence of the sensor data of the sensor,
- but also configured to control the traveler pulley drive in dependence of the sensor data of the (same) sensor of that wire side.

Thus, the sensor data of the same sensor are used for performing two different functions. In contrast to prior art the number of sensors (e.g. load cells) may be reduced, thus reducing material, installation and maintenance costs. Moreover, the sensor according to the invention is arranged at the traveler pulley, i.e. measures the force exerted by the wire on the traveler pulley. The traveler pulley, however, is arranged in the vicinity of the storage spool and serves to spool the wire onto the storage spool or from the storage spool. Hence, the traveler pulley and the pulley sensor are arranged apart from the cutting area and the pulley sensor according to the invention is not adversely influenced by the conditions prevailing in the cutting area.

As already mentioned, the sensor data of the same sensor are used for two different ends: controlling the tensioner and controlling the traveler pulley (drive). Both are done in dependence of the sensor data of the same sensor. It is, however, not necessary to perform the two control functions at the same time or within the same operational mode of the wire management system. Rather, it may be preferred to control the traveler pulley (drive) during a first operational mode (e.g. a preparation mode) in dependence of the sensor data and to control the tensioner during a second operational mode (e.g. a cutting mode) in dependence of the sensor data. The invention includes following possibilities:
- controlling only the tensioner in dependence of the sensor data (i.e. not the traveler pulley drive) in a first mode;
- controlling only the traveler pulley drive in dependence of the sensor data (i.e. not the tensioner) in a second mode or at a different time; and
- controlling both, the tensioner and the traveler pulley drive, in dependence of the sensor data at the same time.

The traveler pulley drive may not be confused with a rotational drive keeping the pulley in rotation. The traveler pulley drive is a drive for moving or shifting the whole traveler pulley including its rotational axis along a path along the storage spool. The angle between the rotational axis of the storage spool and the section of cutting wire extending between traveler pulley and storage spool depends on the relative position between traveler pulley and storage spool. In order to guarantee an optimal transfer without wire wear or wire damage, the angle should be held essentially constant and preferably 90°. By controlling the traveler pulley drive and thus the position of the traveler pulley, the transfer of cutting wire during preparation of the wire saw may be efficiently optimized.

The "at least one spool" in claim 1 may be a spool for receiving cutting wire in low density windings (e.g. low number of overlapping winding layers) or non-overlapping windings (also called: temporary or intermediate storage spool) or a spool for receiving cutting wire in high density windings, i.e. highly multi-layered windings (also called: reservoir spool, such as new wire spool or used-up wire spool).

It should be mentioned that the supplying side also receives cutting wire and the receiving side also supplies cutting wire as the wire is moved back and forth through the cutting area in the cutting mode (or Pilgrim mode), but on average the wire moves from the supplying side, where the spool with new wire is located, to the supply side, where the spool for used-up wire is located. With the terms "wire supplying side for supplying new cutting wire" and "wire receiving side for receiving used cutting wire" is meant, that on average and/or in the course of a plurality of cutting cycles the (new) wire moves from the supplying side, where the spool with new wire is located, to the receiving side, where the spool for used-up wire is located.

The pulley sensor may be a force sensor or any other sensor capable of directly or indirectly measuring the force exerted by the deflected wire on the traveler pulley. The pulley sensor may be formed from or comprise a load cell and/or a strain gauge and/or a piezoelectric component and/or a capacitive sensor (component) and/or an optical sensor, preferably measuring a deformation or shift of a moveable component or the wire.

The object is also achieved by a wire management system, wherein at least one of the wire supplying side and the wire receiving side, preferably the wire supplying side and the wire receiving side each, comprises a pulley sensor for measuring a force acting on the traveler pulley in a direction which is transverse, preferably perpendicular, to the rotational axis of the traveler pulley, and that at least one of the wire supplying side and the wire receiving side, preferably the wire supplying side and the wire receiving side each, comprises at least one further pulley for guiding the cutting wire, wherein none of the further pulley(s) has or interacts with a pulley sensor.

By this measure based on the same inventive idea of arranging the pulley sensor at the traveler pulley the problems of prior art (according to which load cell are arranged in the vicinity of the cutting area and therefor prone to failures and damages) are efficiently solved. The pulley sensor is not only arranged at a location apart of the conditions prevailing in the cutting area, but the overall number of sensors and therefore costs may be reduced.

In a preferred embodiment the control device is configured to operate the wire management system in a cutting mode in which cutting wire is moved through the cutting area, preferably in a number of cycles back and forth, wherein in the cutting mode the tensioner is controlled by the control device in dependence of sensor data of the sensor. In the cutting mode is important to have constant wire tension in order to guarantee high and constant cutting quality and prevent wire breakage. Deviations of an optimal wire tension may be compensated by controlling the tensioner in dependence of sensor data.

In a preferred embodiment the control device is configured to control the tensioner, such that the tension of the cutting wire remains essentially constant, wherein preferably the position or tensioning state of the tensioner is used to control the rotational speed of the (storage) spool(s), the wire guiding means or both. The tensioner (e.g. a so-called "dancer") preferably comprises a tensioning pulley and a tensioning drive for moving the tensioning pulley (resulting in a lower or higher tension of the wire). It is preferred that the position or tensioning state of the tensioner, particularly the position of the tensioning pulley, is used for controlling the rotational speed of the (storage) spools, which is/are driven by rotational drive(s). The rotational drive(s) of the storage spool may be also controlled by the control device in dependence of the sensor data and/or the position and/or tensioning state of the tensioner.

In a preferred embodiment the control device is configured to operate the wire management system in a preparation mode, in which, preferably prior to the cutting procedure, cutting wire is transferred from the wire supplying side via the cutting area to the (storage) spool of the wire receiving side, wherein in the preparation mode the traveler pulley drive moving the traveler pulley is controlled by the control device in dependence of sensor data of the sensor, wherein preferably the controllable tensioner is used as to keep the tension in the cutting wire in a desired range (e.g. maybe also independent of the senor data). In the preparation mode it is important to guarantee a reliable transfer of the cutting wire. As already mentioned the angle between the rotational axis of the (storage) spool and the section of cutting wire extending between traveler pulley and storage spool is of great importance. By controlling the traveler pulley drive and thus the position of the traveler pulley based on the data provided by the sensor, said angle may be held constant.

In a preferred embodiment the control device is configured to control, preferably in dependence of sensor data of the sensor, the traveler pulley drive, such that the angle between the section of cutting wire extending between traveler pulley and storage spool remains essentially constant, preferably essentially 90°.

In a preferred embodiment the tensioner comprises a tensioning pulley and a tensioning drive for adjusting the tensioning pulley. "Adjusting" means that the tensioning pulley is moved and/or that the force exerted by the tensioning drive on the tensioning pulley is increased or decreased.

In a preferred embodiment the tensioning pulley is arranged in the cutting wire path extending between the cutting area and the traveler pulley, wherein preferably the tensioning pulley is a dancer.

In a preferred embodiment the sensor is a force transducer, preferably a load cell, and/or wherein the sensor is a one-dimensional sensor.

In a preferred embodiment the traveler pulley deflects the cutting wire about an angle between 45° and 135°, preferably between 80° and 110°, more preferred about essentially 90°. The direction, in which the force acting on the traveler pulley is measured by the sensor, lies within said angle area.

In a preferred embodiment the sensor is configured to measure the force under an angle to the direction from which the cutting wire when coming from the cutting area reaches the traveler pulley, wherein preferably the angle preferably is essentially 45°.

In a preferred embodiment the cutting area is arranged in a compartment, wherein the traveler pulley and the sensor are arranged outside the compartment. The compartment may be chamber-like and/or may be partially closed or from all sides closed. The walls of the compartment cause that spray of cutting liquid as well as dirt and dust is limited to the cutting area. The traveler pulley and the sensor are arranged outside the compartment and are therefore efficiently protected.

In a preferred embodiment at least one, preferably at least two pulleys are arranged between the cutting area and the storage spool, wherein at least one, preferably at least two of these pulleys does/do not have or does/do not interact with a pulley sensor. As already mentioned the number of sensors may be reduced, since one sensor is used for at least two different functions/ends. It is preferred that each wire side (supplying and receiving side) comprises only one pulley sensor.

In a preferred embodiment the compartment is free from any pulley and or pulley-related sensor. In the case one or more wire deflection pulley(s) is/are provided within the cutting compartment, this means, that said wire deflection pulley(s) do/does not have or interact with a sensor.

In a preferred embodiment the wire supplying side, the wire receiving side or both comprise(s) a rotatable reservoir spool for carrying at least a portion of the cutting wire in overlapping windings or loops, wherein within that side(s) the rotational axis of the storage spool essentially coincides with the rotational axis of a reservoir spool. The reservoir spool and the storage spool may each build the spool for temporarily receiving a portion of the cutting wire in windings (loops).

In a preferred embodiment the traveler pulley is moveable along the rotational axis of a storage spool for temporarily receiving a portion of the cutting wire in windings, preferably along the whole length of the storage spool, and along the rotational axis of a reservoir spool for carrying at least a portion of the cutting wire in overlapping windings, preferably along the whole length of the storage spool, wherein the rotational axis of the storage spool essentially coincides with the rotational axis of the reservoir spool. Such an arrangement of reservoir spool and storage spool is disclosed in detail WO2014087340A2, the disclosure of which is incorporated into the present application by reference.

The object is also achieved with a wire saw for cutting a piece of material, preferably semiconductor material, particularly a wafer cutting wire saw for cutting a plurality of wafers from a piece of material or a wire saw for bricking and/or squaring a piece of material, the wire saw comprising, the wire saw comprising
- a cutting area,
- guiding means for guiding the cutting wire through the cutting area and
driving means for selectively driving the cutting wire in a first direction and in a second direction which is opposite to the first direction,
characterized in that the wire saw comprises a wire management system according to one of the preceding claims, and wherein preferably the guiding means are formed by wire guiding rollers for carrying a cutting wire web.

The object of the invention is also achieved by a method of operating a wire saw with a wire management system according to the invention.

Further embodiments of the invention are indicated in the figures and in the dependent claims. The list of reference marks forms part of the disclosure. The invention will now be explained in detail by the drawings. In the drawings:
- Fig. 1: shows a wire saw comprising a wire management system according to the invention,
- Figs. 2 to 6: shows a unit of storage spool and reservoir spool,
- Fig. 7: shows a wire saw with a wire management system in more detail and with its cutting area being accommodated within a compartment,
- Fig. 8: shows the force F acting on the traveler pulley, and

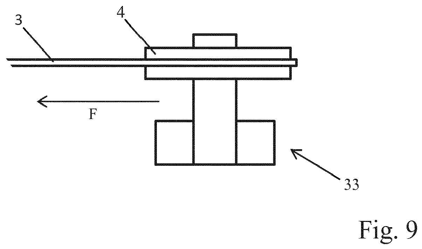

- Fig. 9: shows an example of a sensor mounted to traveler pulley.

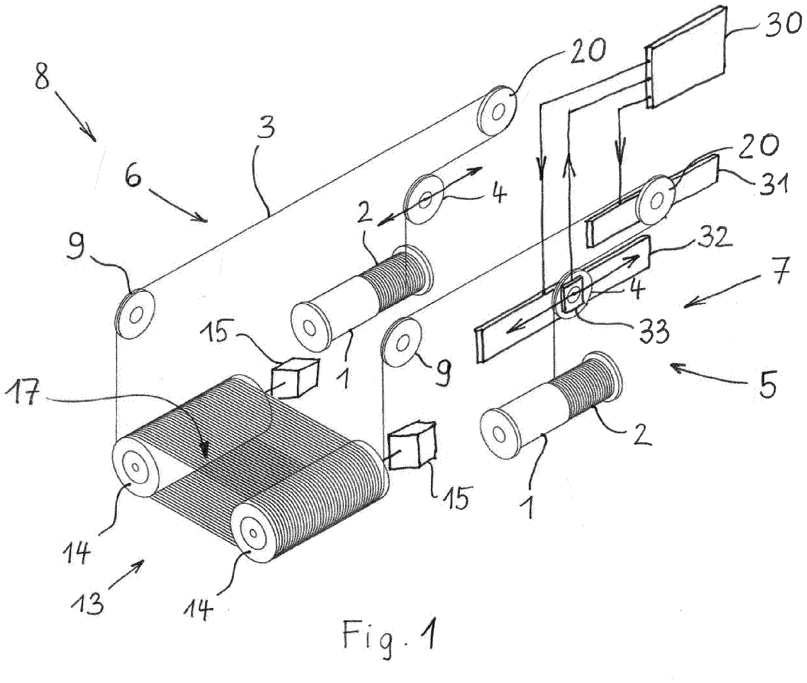

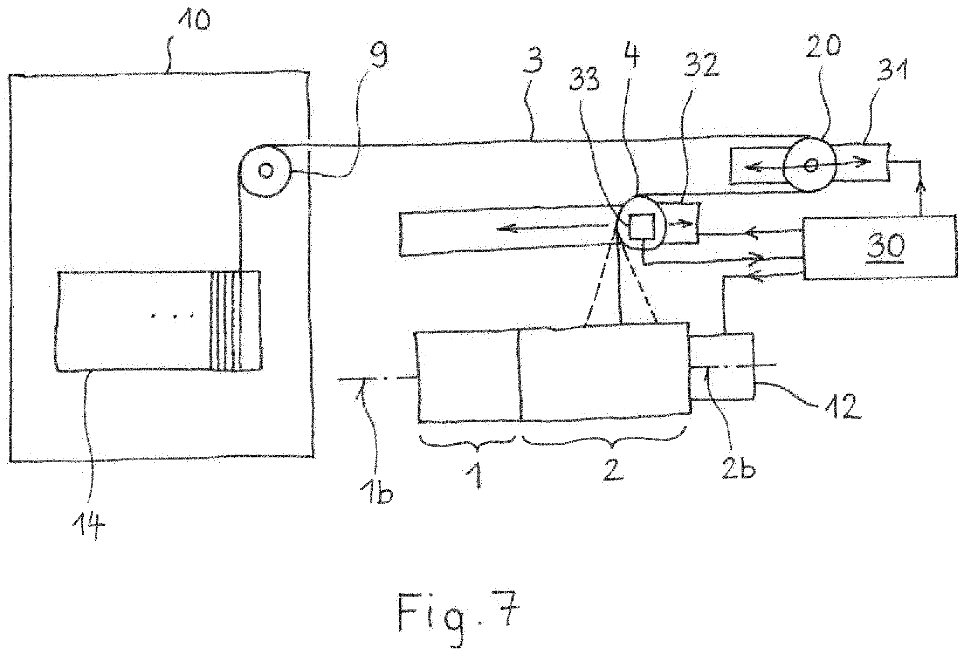

Figs. 1 and 7 show a wire management system 7 of a wire saw 8. The wire saw has a cutting area 13 and wire guiding means - here in form of wire guiding rollers 14 - carrying a section of cutting wire 3, thereby forming a wire web 17 in the cutting area 13.

The wire management system 7 comprises a control device 30, a wire supplying side 5 for supplying new cutting wire 3 to the cutting area 13 and a wire receiving side 6 for receiving used cutting wire 3 from the cutting area 13.

As can be seen from Fig. 1 the wire supplying side 5 comprises a controllable tensioner 20, 31 for adjusting the tension of cutting wire 3. In the present embodiment the tensioner comprises a tensioning pulley 20 and a (linear) tensioning drive 31 for adjusting the tensioning pulley 20, i.e. shifting it along the direction of the double arrow in Figs. 1 and 7.

The wire supplying side 5 further comprises a traveler pulley drive 32 for moving a traveler pulley 4 along the rotational axis of at least one spool 1, 2 for receiving a portion of the cutting wire 3 in windings. The moving direction of the traveler pulley 4 is indicated by a double arrow. The traveler pulley 4 of Figs. 1, 7 and 8 deflects the cutting wire 3 about an angle of essentially 90°.

The angle between the rotational axis of the storage spool 2 and the section of cutting wire 3 extending between traveler pulley 4 and storage spool 2 depends on the relative position between traveler pulley 4 and storage spool 2. In order to guarantee an optimal transfer without wire wear or wire damage the angle should be held essentially constant. By controlling the traveler pulley drive 32 and thus the position of the traveler pulley 4 the transfer of cutting wire 3 during preparation of the wire saw may be efficiently optimized. Fig. 7 shows - indicated with dashed lines - suboptimal runs of the cutting wire between spool 2 and traveler pulley 4. The optimal run is indicated by the middle solid line corresponding to an angle of essentially 90°.

As can be seen from Figs. 1 and 7 the tensioning pulley 20 is arranged in the cutting wire path extending between the cutting area 13 and the traveler pulley 4, wherein preferably the tensioning pulley 20 is a so called dancer (not shown here).

In the present embodiment a storage spool 2 for temporarily receiving cutting wire 3 and a reservoir spool 1 (new wire spool or used wire spool) for temporarily or finally receiving cutting wire 3. It would be, however, possible to use only one spool.

The traveler pulley 4 is moveable along the rotational axis 2b of the storage spool 2 for temporarily receiving a portion of the cutting wire 3 in windings, preferably along the whole length of the storage spool 2, and along the rotational axis 1b of the reservoir spool 1 for carrying at least a portion of the cutting wire 3 in overlapping windings, preferably along the whole length of the storage spool 2, wherein the rotational axis 2b of the storage spool 2 essentially coincides with the rotational axis 1b of the reservoir spool 1.

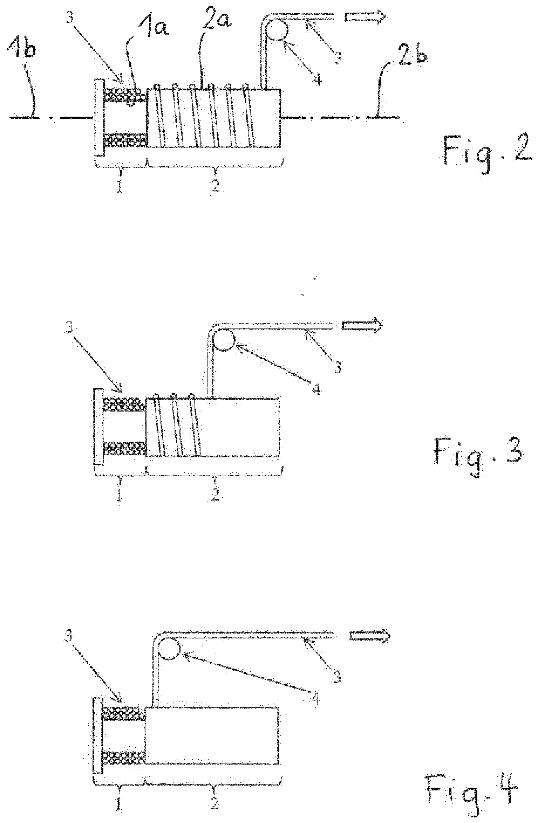

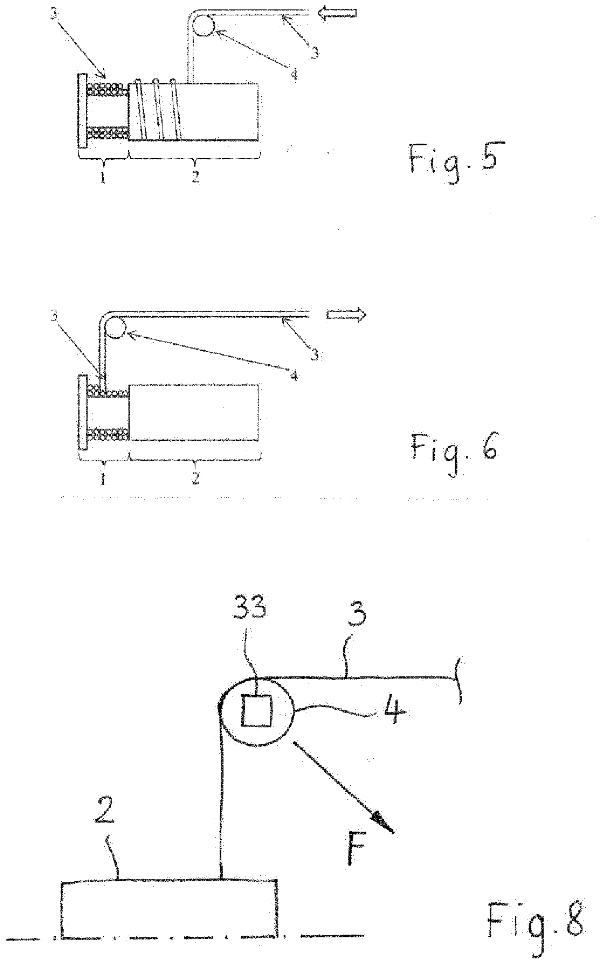

The advantages of using two spools 1, 2 consists in the fact, that the storage spool 2 may be used for temporarily (i.e. during a Pilgrim cycle) receiving cutting wire in non-overlapping windings and/or windings having a lower density than the windings on the reservoir spool 1 (see WO2014087340A2). Figs. 2 to 5 show the action of the traveler pulley during the cutting mode within a Pilgrim cycle. Here, cutting wire 3 is spooled off from the storage spool 2 while traveler pulley 4 moves to the left, in order to hold the angle of the wire between storage spool 2 and traveler pulley 4 constant. In Fig. 5 the moving direction of the cutting wire 3 has changed and wire is spooled on the storage spool 2. Fig. 6 shows a preparation mode, in which (new) cutting wire 3 is spooled off from the reservoir spool 1 (of the supplying side 5) for transferring it directly to (the storage spool 2 of) the receiving side 6.

It should be mentioned that the wire receiving side 6 may be designed in analogous manner as the wire supplying side 5.

A pulley sensor 33 is provided for measuring a force F acting on the traveler pulley 4 in a direction which is transverse, preferably perpendicular, to the rotational axis of the traveler pulley 4 (see also Fig. 8). The sensor 33 may be a force transducer, preferably a load cell, and/or a one-dimensional sensor, i.e. delivering one value (e.g. voltage). The sensor 33 may be configured to measure the force F under an angle to the direction from which the cutting wire 3 when coming from the cutting area 13 reaches the traveler pulley 4, wherein preferably the angle preferably is essentially 45° (see Fig. 8).

The control device 30 is configured to control the tensioner 20, 31 and the traveler pulley drive 32 each in dependence of the sensor data of the same sensor 33.

It can be seen from Figs. 1 and 7 that the wire supplying side 5 and the wire receiving side 6 each comprise further deflection pulley 9 for guiding the cutting wire 3. However, note that pulley 9 does not have or interact with a pulley sensor. Also, the tensioning pulley 20 does not have or interact with a pulley sensor.

As can be seen from Fig. 7 the cutting area 13 is arranged in a compartment 10, wherein the traveler pulley 4 and the sensor 33 are arranged outside the compartment 10. The compartment 10 is free from any pulley-related sensor. Preferably, pulley 9 is also outside of the compartment 10 (not shown here)

According to a preferred embodiment at least one, preferably at least two pulley(s) 9, 20, 4 are arranged between the cutting area 13 and the spool 1, 2, wherein at least one, preferably at least two of these pulleys 9, 20 does/do not have or does/do not interact with a pulley sensor.

The control device 30 may be configured to operate the wire management system 7 in a cutting mode in which cutting wire 3 is moved through the cutting area 13, preferably in a number of cycles back and forth (Pilgrim mode). In the cutting mode, the tensioner 20, 31 is controlled by the control device 30 in dependence of sensor data of the sensor 33. The control device 30 is configured to control the tensioner 20, 31, such that the tension of the cutting wire 3 remains essentially constant. As indicated in Fig. 7, the control device also controls the spool drive 12. It is preferred, if the position or tensioning state of the tensioner 20, 31 is used to control the rotational speed of the spools 1, 2 (the spools 1, 2 may be fixed with each other or each spool 1, 2 may have its own drive).

For the purpose of preparation of the wire saw the control device 30 may be configured to operate the wire management system 7 in a preparation mode, in which, preferably prior to the cutting procedure, (new) cutting wire 3 is transferred from the wire supplying side 5 via the cutting area 13 to the spool(s) 1, 2 of the wire receiving side 6. In the preparation mode the traveler pulley drive 32 moving the traveler pulley 4 (along the spool 2) is controlled by the control device 30 in dependence of sensor data of the (same) sensor 33. At the same time the tensioner 20, 31 may keep the tension in the cutting wire 3 in a desired range.

The control device 30 is preferably configured to control, preferably in dependence of sensor data of the sensor 33, the traveler pulley drive 32, such that the angle between the rotational axis of the spool(s) 1, 2 and the section of cutting wire 3 extending between traveler pulley 4 and spool 1, 2 remains essentially constant, preferably essentially 90°.

The invention is not restricted to these embodiments. Other variants will be obvious for the person skilled in the art and are considered to lie within the scope of the invention as formulated in the following claims. Individual features described in all parts of the above specification, particularly with respect to the figures may be combined with each other to form other embodiments and/or applied mutatis mutandis to what is described in the claims and to the rest of the description, even if the features are described in respect to or in combination with other features.

### List of reference signs

- 1: reservoir spool
- 1b: rotational axis of reservoir spool 1
- 2: storage spool
- 2b: rotational axis of storage spool 2
- 3: cutting wire
- 4: traveler pulley
- 5: wire supplying side
- 6: wire receiving side
- 7: wire management system
- 8: wire saw
- 9: deflection pulley
- 10: compartment
- 12: spool drive
- 13: cutting area
- 14: wire guide rollers
- 15: driving means
- 17: wire web
- 20: tensioning pulley
- 30: control device
- 31: tensioning drive
- 32: traveler pulley drive
- 33: sensor

## Claims

1. Wire management system (7) for a wire saw (8), which has a cutting area (13) and wire guiding means for carrying at least one section of cutting wire (3), preferably a wire web (17), in the cutting area (13), the wire management system (7) comprising
- a control device (30),
- a wire supplying side (5) for supplying new cutting wire (3) to the cutting area (13),
- a wire receiving side (6) for receiving used cutting wire (3) from the cutting area (13),
wherein at least one of the wire supplying side (5) and the wire receiving side (6), preferably the wire supplying side (5) and the wire receiving side (6) each, comprise(s) a controllable tensioner (20, 31) for adjusting the tension of cutting wire (3) and a traveler pulley drive (32) for moving a traveler pulley (4) along the rotational axis of at least one spool (1, 2) for receiving a portion of the cutting wire (3) in windings,
**characterized in that** at least one of the wire supplying side (5) and the wire receiving side (6), preferably the wire supplying side (5) and the wire receiving side (6) each, comprise(s) a pulley sensor (33) for measuring a force acting on the traveler pulley (4) in a direction which is transverse, preferably perpendicular, to the rotational axis of the traveler pulley (4), and that the control device (30) is configured to control within a wire side (5, 6) the tensioner (20, 31) and the traveler pulley drive (32) each in dependence of the sensor data of the sensor (33) of that wire side (5, 6).

2. Wire management system (7) for a wire saw (8), which has a cutting area (13) and wire guiding means for carrying at least one section of cutting wire (3) in the cutting area (13), particularly according to claim 1, the wire management system (7) comprising
- a control device (30),
- a wire supplying side (5) for supplying cutting wire (3) to the cutting area (13),
- a wire receiving side (6) for receiving cutting wire (3) from the cutting area (13),
wherein the wire supplying side (5) and the wire receiving side (6) each comprise a controllable tensioner (20, 31) for adjusting the tension of cutting wire (3) and a traveler pulley drive (32) for moving a traveler pulley (4) along the rotational axis of at least one spool (1, 2) for receiving a portion of the cutting wire (3) in windings,
**characterized in that** at least one of the wire supplying side (5) and the wire receiving side (6), preferably the wire supplying side (5) and the wire receiving side (6) each, comprises a pulley sensor (33) for measuring a force acting on the traveler pulley (4) in a direction which is transverse, preferably perpendicular, to the rotational axis of the traveler pulley (4),
and that at least one of the wire supplying side (5) and the wire receiving side (6), preferably the wire supplying side (5) and the wire receiving side (6) each, comprises at least one further pulley (20, 9) for guiding the cutting wire (3), wherein none of the further pulley(s) (20, 9) has or interacts with a pulley sensor.

3. Wire management system according to claim 1 or claim 2, wherein the control device (30) is configured to operate the wire management system (7) in a cutting mode in which cutting wire (3) is moved through the cutting area (13), preferably in a number of cycles back and forth, wherein in the cutting mode the tensioner (20, 31) is controlled by the control device (30) in dependence of sensor data of the sensor (33).

4. Wire management system according to one of the preceding claims, wherein the control device (30) is configured to control the tensioner (20, 31), such that the tension of the cutting wire (3) remains essentially constant, wherein preferably the position or tensioning state of the tensioner (20, 31) is used to control the rotational speed of the spool (1, 2).

5. Wire management system according to one of the preceding claims, wherein the control device (30) is configured to operate the wire management system (7) in a preparation mode, in which, preferably prior to the cutting procedure, cutting wire (3) is transferred from the wire supplying side (5) via the cutting area (13) to the spool (1, 2) of the wire receiving side (6), wherein in the preparation mode the traveler pulley drive (32) moving the traveler pulley (4) is controlled by the control device (30) in dependence of sensor data of the sensor (33), wherein preferably the controllable tensioner (20, 31) is controlled as to keep the tension in the cutting wire (3) in a desired range.

6. Wire management system according to one of the preceding claims, wherein the control device (30) is configured to control, preferably in dependence of sensor data of the sensor (33), the traveler pulley drive (32), such that the angle between the rotational axis of the spool (1, 2) and the section of cutting wire (3) extending between traveler pulley (4) and spool (1, 2) remains essentially constant, preferably essentially 90°.

7. Wire management system according to one of the preceding claims, wherein the tensioner comprises a tensioning pulley (20) and a tensioning drive (31) for adjusting the tensioning pulley (20).

8. Wire management system according to one of the preceding claims, wherein the tensioning pulley (20) is arranged in the cutting wire path extending between the cutting area (13) and the traveler pulley (4), wherein preferably the tensioning pulley (20) is a dancer.

9. Wire management system according to one of the preceding claims, wherein the traveler pulley (4) deflects the cutting wire (3) about an angle between 45° and 135°, preferably between 80° and 110°, more preferred about essentially 90°.

10. Wire management system according to one of the preceding claims, wherein the sensor (33) is configured to measure the force under an angle to the direction from which the cutting wire (3) when coming from the cutting area (13) reaches the traveler pulley (4), wherein preferably the angle preferably is essentially 45°.

11. Wire management system according to one of the preceding claims, wherein the cutting area (13) is arranged in a compartment, wherein the traveler pulley (4) and the sensor (33) are arranged outside the compartment, wherein preferably the compartment (10) is free from any pulley-related sensor.

12. Wire management system according to one of the preceding claims, wherein at least one, preferably at least two pulley(s) (9) are arranged between the cutting area (13) and the spool (1, 2), wherein at least one, preferably at least two of these pulleys does/do not have or does/do not interact with a pulley sensor.

13. Wire management system according to one of the preceding claims, wherein the traveler pulley (4) is moveable along the rotational axis of a storage spool (2) for temporarily receiving a portion of the cutting wire (3) in windings, preferably along the whole length of the storage spool (2), and along the rotational axis of a reservoir spool (1) for carrying at least a portion of the cutting wire (3) in overlapping windings, preferably along the whole length of the storage spool (2), wherein the rotational axis (2b) of the storage spool (2) essentially coincides with the rotational axis (1b) of the reservoir spool (1).

14. Wire saw for cutting a piece of material, preferably semiconductor material, particularly a wafer cutting wire saw for cutting a plurality of wafers from a piece of material or a wire saw for bricking and/or squaring a piece of material, the wire saw comprising, the wire saw (8) comprising
- a cutting area (13),
- guiding means for guiding the cutting wire (3) through the cutting area (13) and
driving means for selectively driving the cutting wire (3) in a first direction and in a second direction which is opposite to the first direction,
**characterized in that** the wire saw (8) comprises a wire management system (7) according to one of the preceding claims, and **wherein** preferably the guiding means are formed by wire guiding rollers (14) for carrying a cutting wire web (17).

15. Method of operating a wire saw (8) with a wire management system (7) according to one of the claims 1 to 13 and/or with a wire saw (8) according to claim 14.
